Europäisches Patentamt

European Patent Office

Office européen des brevets

(11) Veröffentlichungsnummer: **0 228 990**
**A1**

## EUROPÄISCHE PATENTANMELDUNG

(21) Anmeldenummer: 86810490.2

(22) Anmeldetag: 31.10.86

(51) Int. Cl.⁴: **D 03 D 49/60**
**F 16 B 3/00**

(30) Priorität: 17.12.85 CH 5368/85

(43) Veröffentlichungstag der Anmeldung:
15.07.87 Patentblatt 87/29

(84) Benannte Vertragsstaaten: **BE DE FR IT**

(71) Anmelder: **GEBRÜDER SULZER
AKTIENGESELLSCHAFT
Zürcherstrasse 9
CH-8401 Winterthur (CH)**

(72) Erfinder: **Schwarz, Erwin
Diensbach 11
CH-8340 Hinwil (CH)**

(54) Webmaschine.

(57) In einer Vorrichtung zur Befestigung von gewebebildenden Teilen (19) an der Weblade einer Webmaschine werden zwei keilförmig gegeneinander gerichtete Klemmstücke (71,72, 91,92) durch eine Klemmschraube (6) gegeneinander gezogen, wobei sie sich einseitig mittels schräg zur Schraubenachse liegenden Klemmflächen (140) in der Weblade abstützen. Mindestens eines der Teile stützt sich auf seiner anderen Seite unmittelbar gegen das gewebebildende Teil (19) abstützt. Dabei kann sich das zweite Klemmstück (71,72) auf seiner anderen Seite auf dem ersten Klemmstück (91,92) abstützen. Dadurch können die Befestigungselemente (71,91,6) in vormontiertem Zustand in die entsprechende Nut (16) der Weblade eingeführt werden, wodurch die Montagezeit gering ist.

FIG. 5

EP 0 228 990 A1

**Beschreibung**

Webmaschine

Die Erfindung betrifft eine Vorrichtung zur Befestigung von gewebebildenden Teilen an der Weblade einer Webmaschine, wobei die Weblade eine Nut besitzt, in der das zu befestigende Teil zusammen mit Klemmelementen sitzt.

Bei der Entwicklung von Webmaschinen mit grossen Schusseintragsleistungen, die durch hohe Arbeitsfrequenzen erreicht werden, kommt es darauf an, dass besonders die rhythmisch hin- und herbewegten Organe möglichst massenarm gestaltet werden. Dies trifft besonders auf die Weblade und die an ihr befestigten Teile für den Schusseintrag und Schussanschlag zu. Andererseits müssen die zugehörigen Befestigungselemente bedienungsfreundlich ausgeführt werden, damit die Stillstandszeiten der Webmaschinen kurz bleiben.

Zur Aufnahme des Riets oder z.B. der Hilfsdüsen bei Lufteintrag dient bei modernen Maschinen in der Regel ein stranggezogenes Leichtmetallprofil, mit welchem diese Teile lösbar verbunden sein müssen. In der US-Patentschrift 4 489 762 ist eine Weblade dargestellt, die zur Aufnahme von Befestigungselementen durchgehende Nuten aufweist. Darin können T-Nutensteine als Muttern für Befestigungsschrauben eingesetzt werden. Bei anderen Webladen ohne Nutensteine sind Gewindelöcher im Ladenprofil, die unter relativ grossem Aufwand gebohrt sind und leicht beschädigt werden können. Bei der Befestigungsart in der erwähnten US-Patentschrift 4 489 762 erfordert die Montage von Riet und Hilfsdüsen einiges Geschick vom Bedienungspersonal, wenn die Befestigungsschrauben in die Gewindelöcher der leicht verschiebbaren Nutensteine eingesetzt werden. Ein entsprechend grosser Zeitaufwand ist mit dieser Tätigkeit verbunden. Ein weiterer Nachteil der nach der erwähnten US-Patentschrift bekannten Lösung ist der relativ grosse Materialaufwand, der durch die Führungsrinnen mit trapezförmigem Querschnitt für Riet und Hilfsdüsen und für die darunterliegende T-Nut nötig ist.

Es ist Aufgabe dieser Erfindung, die Nachteile bekannter Lösungen zu beseitigen, indem eine Befestigungsvorrichtung geschaffen wird, die ein rasches Einsetzen vormontierter Elemente in die Weblade gestattet und zudem platzsparend bzw. kostengünstig ist. Diese Aufgabe wird dadurch gelöst, dass die Klemmelemente aus keilförmig gegeneinander gerichteten Klemmstücken gebildet sind, welche durch eine Klemmschraube gegeneinandergezogen werden und sich dabei einerseits mittels schräg zur Schraubenachse liegenden Klemmflächen in der Weblade abstützen und von welchen mindestens eines sich auf seiner anderen Seite unmittelbar gegen das gewebebildende Teil abstützt. Eines der Klemmstücke kann länger ausgeführt sein als das zweite und mehrere Bohrungen zur Aufnahme von Klemmschraubenstücke mit Schraubenlöchern in die Nut der Weblade hereinsteckter Klemmschrauben und zugehöriger zweiter Klemmstücke mit Schraubenlöchern in die Nut der Weblade hereingedrückt wird. Das zweite Klemmstück kann sich auf einer Seite auf einer Auflagefläche am ersten Klemmstück abstützen. Zwischen dem ersten und dem zweiten Klemmstück wird eine die Schraube umgebende Druckfeder eingesetzt, welche bei nicht angezogener Klemmschraube die Klemm stücke in Richtung der Schraubenachse auseinanderhält. Durch diese Bauart wird bei geringem Platzbedarf eine schnell montierbare und sicher festsitzende Verschraubung realisiert. Bei der Montage bzw. bei Wartungsarbeiten können Klemmstücke und Klemmschraube zur Befestigung eines gewebebildenden Teils als vormontierte Einheit in die Weblade eingesetzt werden, da die lichte Weite der jeweiligen Nut in der Weblade, quer zur Einschieberichtung der Klemmstücke in die Nut gemessen, grösser als die entsprechende Breite des Klemmstücks ist.

Im folgenden wird die Erfindung anhand der Figuren in verschiedenen Ausführungen beschrieben. Es zeigen:

Fig. 4 eine perspektivische Darstellung eines Teils einer Weblade I;

Fig. 5, 6 zugehörige Ansichten in Längsrichtung der Weblade in zwei Ausführungsformen.

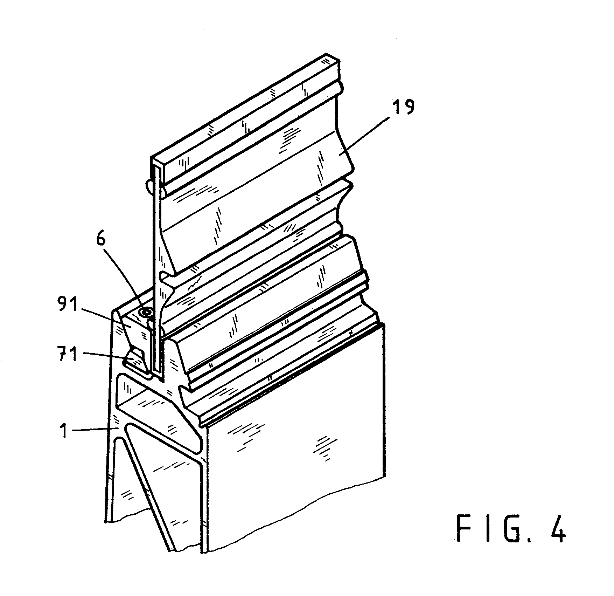

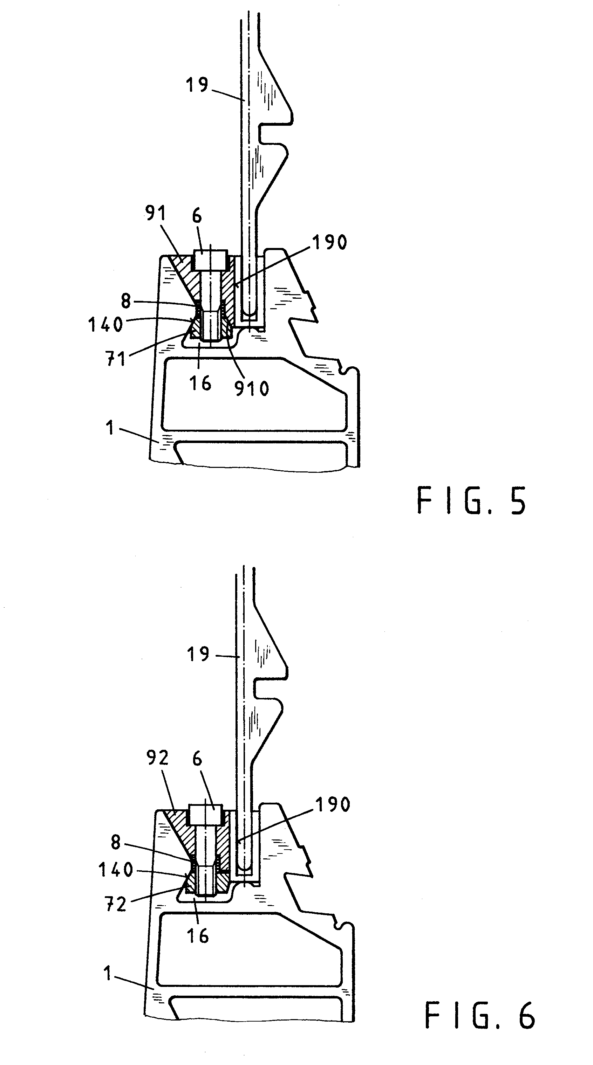

In den Fig. 5,6 ist die Erfindung in ihrer Anwendung zur Befestigung des Rietes I9 in zwei Ausführungsformen dargestellt. Neben dem Klemmstück 7I bzw. 72 und der zugehörigen Klemmschraube 6 ist als zweites Klemmstück eine Klemmschiene 9I bzw. 92 vorhanden, welche in die Nut I6 in der Weblade I bei Festziehen der Schrauben 6 nach unten gedrückt wird und dabei aufgrund ihres keilförmigen Querschnitts das Riet I9 nach rechts gegen die Weblade I schiebt, wodurch es festgeklemmt ist. Während das Klemmstück 7I auf der linken Seite auf der Klemmfläche I4O der Weblade aufliegt, stützt es sich auf der anderen Seite an der Klemmschiene 9I ab. Ueber die Klemmschiene 9I übt das Klemmstück 7I auf den unteren Teil der Einspannzone des Rietes I9 eine Kraft aus. Bei dem Ausführungsbeispiel in Fig. 5 ist die Auflagefläche 9IO der Klemmschiene 9I für das Klemmstück 7I gegen die Achse der Klemmschraube 6 unter gleichem Winkelbetrag wie die Klemmfläche I4O gegen diese Schraubenachse geneigt. In Fig. 6 reicht das Klemmstück 72 nach rechts bis zur Klemmfläche I9O des Rietes I9. Es wird also sowohl von der Klemmschiene 92 als auch vom Klemmstück 72 festgehalten.

Die Klemmschiene 9I bzw. 92 kann sich in Schusseintragsrichtung über die ganze Länge des Rietes erstrecken oder in einzelne Abschnitte aufgeteilt sein. Die Klemmstücke werden mit Vorteil einzelnen Klemmschrauben 6 zugeordnet; ihre Länge in Schussrichtung beträgt nur ein Mehrfaches des Schraubengewindedurchmessers.

Durch die beschriebenen Ausführungen der Erfindung ist eine schnelle und exakte Montage auf der Weblade gewährleistet.

Die Federelemente 8 in Fig. 5 und 6, hier als spiralförmige Druckfedern gestaltet, verhindern bei

demontiertem Riet I9, dass die Klemmschienen 9I bzw. 92 in die Nut I6 fallen und so beim Einlegen des Rietes I9 hinderlich sind.

## Patentansprüche

I. Vorrichtung zur Befestigung von gewebebildenden Teilen (I9) an der Weblade (I) einer Webmaschine, wobei die Weblade eine Nut (I6) besitzt, in der das zu befestigende Teil zusammen mit Klemmelementen sitzt, dadurch **gekennzeichnet**, dass die Klemmelemente aus keilförmig gegeneinander gerichteten Klemmstücken (7I,72, 9I,92) gebildet sind, welche durch eine Klemmschraube (6) gegeneinandergezogen werden und sich dabei einerseits mittels schräg zur Schraubenachse liegenden Klemmflächen (I4O,I4I) in der Weblade abstützen und von welchen mindestens eines sich auf seiner anderen Seite unmittelbar gegen das gewebebildende Teil (I9) abstützt.

2. Vorrichtung nach Anspruch I, dadurch gekennzeichnet, dass eines der Klemmstücke (9I,92) mehrere Bohrungen zur Aufnahme von Klemmschrauben aufweist, das mittels mehrerer durchgesteckter Klemmschrauben und zugehöriger Klemmstücke mit Schraubenlöchern (7I,72) in die Nut der Weblade hereingedrückt wird.

3. Vorrichtung nach Anspruch 2, dadurch gekennzeichnet, dass sich das zweite Klemmstück auf einer Seite gegen eine Auflagefläche am ersten Klemmstück (9I) abstützt.

4. Vorrichtung nach Anspruch I, dadurch gekennzeichnet, dass zwischen beiden Klemmstücken (9I,7I bzw. 92,72) eine die Schraube (6) umgebende Druckfeder eingesetzt ist, welche bei nicht angezogener Klemmschraube (6) die Klemmstücke in Richtung der Schraubenachse auseinanderhält.

0228990

FIG. 4

0228990

FIG. 5

FIG. 6

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 345 610 (THE CINCINNATI MINE MACHINERY CO.) * Figuren 1,3,4,6,24,25,29,30 * | 1-3 | D 03 D 49/60 F 16 B 3/00 |
| Y | FR-A-2 098 357 (SULZER) * Seite 3, Zeile 12 - Seite 5, Zeile 4; Figuren 1-4 * | 1-3 | |
| A | | 4 | |
| A | FR-A-1 551 284 (ARNOLD) | | |
| A,D | EP-A-0 122 087 (DRAPER) & US-A-4 489 762 | | |

| RECHERCHIERTE SACHGEBIETE (Int. Cl.4) |
|---|
| D 03 D F 16 B |

Der vorliegende Recherchenbericht wurde für alle Patentansprüche erstellt.

| Recherchenort DEN HAAG | Abschlußdatum der Recherche 24-03-1987 | Prüfer BOUTELEGIER C.H.H. |
|---|---|---|